# EUROPEAN PATENT APPLICATION

(11) **EP 4 524 812 A1**
(43) Date of publication of application: **19.03.2025**
(21) Application number: 23803079.5
(22) Date of filing: 27.02.2023
(51) Int. Cl.: G06K 7/10

(54) **DEVICE FOR READING AND ENCODING RFID TAGS**

(30) Priority: 10.05.2022 ES 202230771 U
(71) Applicant: Rielec Automatizacion Industrial, S.L., 46870 Ontinyent (Valencia) (ES)
(72) Inventor: RIUS PASCUAL, Luis, 46870 Ontinyent Valencia (ES)
(74) Representative: Ungria López, Javier
(86) International application number: PCT/ES2023/070107
(87) International publication number: WO 2023/218103

(57) **Abstract**

The subject matter of the present invention belongs to the technical field of reading and encoding RFID tags. More specifically, the invention relates to a manually actuated device for reading and encoding such RFID tags.

## Description

### OBJECT OF THE INVENTION

The object of the present invention belongs to the technical field of reading and encoding RFID tags. More specifically, the present invention proposes a manually actuated device for reading and encoding tags of this type.

### TECHNICAL PROBLEM TO BE SOLVED AND BACKGROUND OF THE INVENTION

RFID tags have been widely used for product identification in recent years. This is a solution that allows information about the products identified with said tags to be obtained quickly and unambiguously. To that end, wave-emitting antennas are used, such that the emitted waves bounce off the RFID tags and the measurement or reading of bounced off waves allows determining the characteristics associated with the RFID tags arranged in the reading area (antenna influence area).

RFID tags are used, for example, to provide information about a plurality of products housed in a package. As a result of the use of RFID technology, it is not necessary for an operator to check the tag on each article one by one, rather information about all the products found in a package (i.e., information about the RFID tag of each of the products) can be obtained in a single reading.

Many of the current devices for reading and encoding RFID tags are integrated in product assembly and packaging/unpacking lines. In most cases, the reading and encoding speed is essential and devices of this type are actuated in a completely automatic manner.

### DESCRIPTION OF THE INVENTION

The invention relates to a manually actuated device for reading and encoding RFID tags.

The device comprises a box capable of moving vertically between an upper position and a lower position which forms, when it is in said lower position, along with a lower base, an enclosure hermetically sealed against the UHF waves emitted by the antennas for the reading and encoding of the RFID tags. As a result of its manual operation, this device is particularly suitable when an extremely reliable reading and encoding is required.

The device for reading and encoding RFID tags comprises a box which can be made, for example, of metal or a textile material with metal fibres, with the possibility of moving vertically between an upper position and a lower position. The movement between both positions is regulated by means of a manual actuation system which comprises a mechanism with levers and counterweights and allows an operator to move the box comfortably and with a controlled movement.

The box comprises a lower opening and at least one seal around said opening, such that, when the box is in a lower position, it forms a Faraday cage together with a lower tray of the device, made of metal. At least one UHF (ultra high frequency) antenna which allows reading and encoding RFID tags is arranged inside the box. In this way, by placing at least one element with an RFID tag inside the Faraday cage and by means of using the at least one antenna, a correct and precise reading of the RFID tag of the element is performed.

That is, at least the element with an RFID identification tag is arranged on the lower tray and, by moving the box to the lower position, thereby housing the element with the RFID tag therein, the reading and encoding of said RFID tag can be performed using, to that end, at least one ultra high frequency wave-emitting antenna. Preferably, the device is used for simultaneously reading a plurality of RFID tags so, instead of placing a single article with an RFID tag on the lower tray, a package with a plurality of articles with RFID tags is placed. This allows the entire package to be located inside the reading area when lowering the box to the lower position, and all the RFID tags contained therein can be read at the same time.

Since this box is a manually actuated box, it is simpler, more cost-effective, and easier to install and move compared to automatic RFID tag reading tunnels. Furthermore, it is particularly useful for manually checking packages before they leave the warehouse or for custom, low-volume orders. Companies and industrial warehouses that move discrete amounts of products identified with RFID tags can benefit from all these advantages.

### BRIEF DESCRIPTION OF THE FIGURES

To complete the description and in order to assist in a better understanding of the features of the invention, a set of drawings is attached to this specification, as an integral part thereof, in which the following has been represented for illustrative and non-limiting purposes:
Figure 1 depicts the device for reading and encoding RFID tags with the box in the lower position.
Figure 2 depicts a front view of the device for reading and encoding RFID tags with the box in the lower position.
Figure 3A depicts a profile view of the device for reading and encoding RFID tags with the box in the lower position.
Figure 3B depicts a sectioned profile view of the device for reading and encoding RFID tags with the box in the lower position.

### DETAILED DESCRIPTION

The present invention should not be limited to the embodiment described herein. Other configurations may be made by those skilled in the art in view of the present description. Accordingly, the scope of the invention is defined by the following claims.

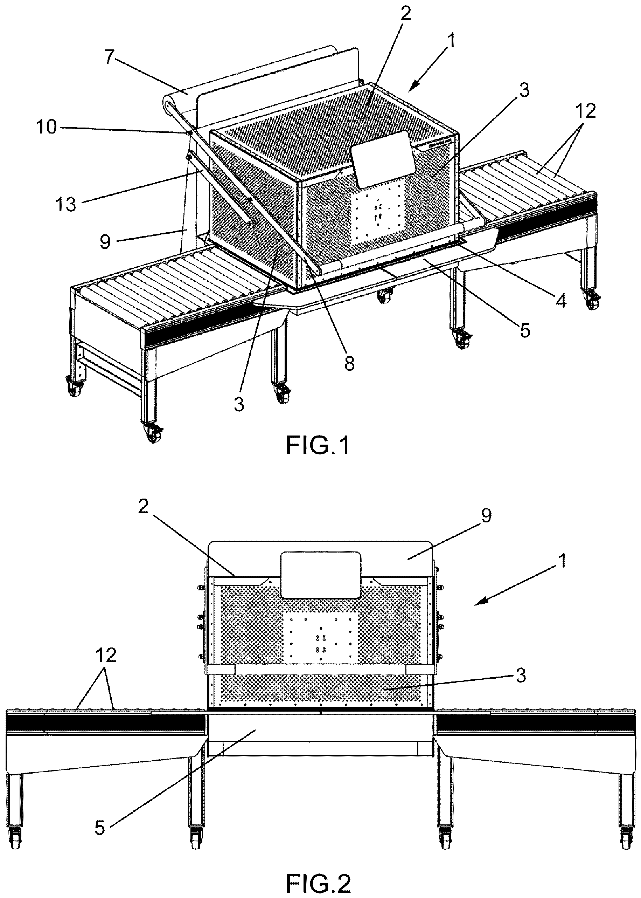

The device for reading and encoding RFID tags of the invention comprises a box (1), made of metal or a textile material with metal fibres, having the possibility of moving vertically between an upper position and a lower position, wherein the box comprises an upper wall (2), side walls (3), and a lower opening, and the box (1) comprises at least one seal (4), made of a material with elastic and electromagnetic insulation properties, arranged around the perimeter of the lower opening. The device of the present invention can be seen in Figure 1. The device also comprises a lower tray (5), made of metal, intended for receiving at least one article with an RFID tag. Preferably, it receives at least one package (11) with a plurality of articles with their corresponding associated RFID tags.

When the box (1) is in the lower position, it is in contact with the lower tray (5) such that a hermetically sealed housing with electromagnetic shielding is created between the upper wall (2) and the side walls (3) of the box (1), the at least one seal (4), and the lower tray (5). Likewise, the device comprises at least one antenna (6) for reading and encoding RFID tags which is housed in the box (1), configured to read and encode the RFID tags of the article with an RFID tag or the articles housed in the package (11). Preferably, the antenna (6) is an UHF (ultra high frequency) antenna.

Likewise, as can be seen in said Figure 1, the device comprises a manual actuation system having at least one counterweight (7) and side levers (8), attached to a frame (9) of the device and to the box (1) such that, by means of manually actuating the levers (8), said levers (8) pivot about an attachment point (10) where the lever (8) is attached to the frame (9), causing a movement of the box (1) in a direction opposite the movement of the counterweight (7).

Figure 1 shows an embodiment in which reading is to be performed on a package (11) comprising a plurality of articles with RFID tags. Preferably, the invention is used for reading a plurality of RFID tags in a single operation, i.e., when the package (11) is positioned in correspondence with the box (1), the operator acts on the actuation system to move said box (1) to the lower position. Upon reaching the lower position and upon the at least one seal (4) coming into contact with the lower tray (5), an area for reading and encoding RFID tags is formed inside the box.

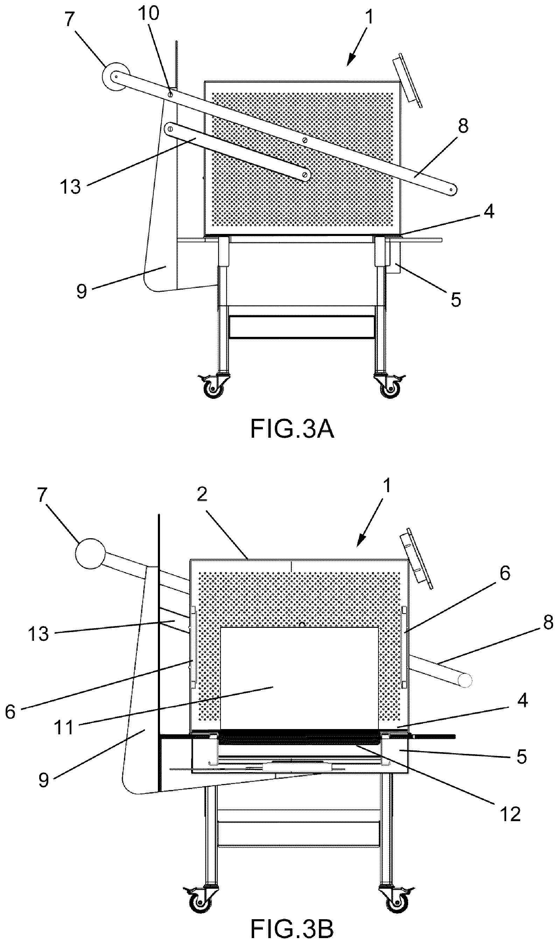

Figure 2 depicts a front view of the device of the invention and the same device can be seen in Figures 3A-B in a profile view.

As can be clearly seen in Figures 3A-B, the manual actuation system may comprise additional levers (13), arranged parallel to the levers (8), with one end being pivotably attached to the frame (9) and an opposite end being pivotably attached to the box (1).

Likewise, to facilitate the movement of the box (1), the upper wall (2) and the side walls (3) can be formed by metal sheets that are 2 mm thick. If the thickness were greater, the box (1) would weigh too much and would be more difficult to move. Furthermore, it would be necessary to use a heavier counterweight (7) to enable counteracting the weight of said box (1). However, if it is less said thickness, the sheet forming the upper wall (2) and the side walls (3) would not have sufficient mechanical strength and may deform.

Also preferably, the upper wall (2) and the side walls (3) of the box (1) are made of perforated aluminium. This allows emptying air from inside the box (1) to facilitate the movement of said box (1) to the lower position. In one embodiment, the diameters of the perforations of the upper wall (2) and side walls (3) of the box (1) have a diameter of 5 mm. In another embodiment, the centres of the perforations of the upper wall (2) and the side walls (3) of the box (1) are separated from one another by 12 mm.

It has already been described that the at least one seal (4) is formed with a material with elastic and electromagnetic insulation properties. The elastic properties of the seal (4) are required to prevent the lower tray (5) from sustaining sudden impacts when the box (1) is moved to the lower position and the electromagnetic insulation properties allow ensuring hermetic sealing during the reading and encoding of the RFID tags, preventing the waves emitted by the antennas (6). To that end, the at least one seal (4) is preferably made of metal foam. In one embodiment, said seal (4) is a linear element that is 1 cm thick.

The device may also comprise at least one through-wall connector, in the lower tray (5), through which cables go through said lower tray (5) to be partially housed inside the housing formed by the upper wall (2), the side walls (3), the seals (4), and the lower tray (5) when the box (1) is in the lower position. In this case, the cables can furthermore be surrounded by a shielding mesh.

To move the package (11) (or the single article with an RFID tag) comfortably from and to the lower tray (5), the device may comprise rollers (12) made of a plastic material, arranged on the lower tray (5). Specifically, a plurality of said rollers (12) are located on the lower tray (5) such that, when the box is in the lower position, these rollers (12) are housed inside said box (1) and are configured to support the package (11). The rollers (12) are made of a plastic material to prevent them from absorbing the waves emitted by the antennas (6) in the RFID tag reading and encoding area.

## Claims

1. A device for reading and encoding RFID tags, **characterised in that** it comprises:
- a box (1), made of metal or a textile material with metal fibres, with the possibility of moving vertically between an upper position and a lower position, wherein the box comprises an upper wall (2), side walls (3), and a lower opening, and the box (1) comprises at least one seal (4), made of a material with elastic and electromagnetic insulation properties, arranged around the perimeter of the lower opening;
- a lower tray (5), made of metal, intended for receiving at least one article with an associated RFID tag;
wherein, when it is in the lower position, the box (1) is in contact with the lower tray (5) such that a hermetically sealed housing with electromagnetic shielding is created between the upper wall (2) and the side walls (3) of the box, the at least one seal (4), and the lower tray (5);
- at least one antenna (6) for reading and encoding RFID tags which is housed in the box (1);
- a manual actuation system comprising at least one counterweight (7) and side levers (8), attached to a frame (9) of the device and to the box (1) such that, by means of manually actuating the levers (8), said levers (8) pivot about an attachment point (10) where the lever (8) is attached to the frame (9), causing a movement of the box (1) in a direction opposite the movement of the counterweight (7).

2. The device according to claim 1, wherein the manual actuation system comprises additional levers (13), arranged parallel to the levers (8), with one end being pivotably attached to the frame (9) and an opposite end being pivotably attached to the box (1).

3. The device according to any one of the preceding claims, wherein the upper wall (2) and the side walls (3) of the box are formed by metal sheets that are 2 mm thick.

4. The device according to any one of the preceding claims, wherein the upper wall (2) and the side walls (3) of the box (1) are made of perforated aluminium.

5. The device according to claim 4, wherein the diameters of the perforations of the upper wall (2) and side walls (3) of the box (1) have a diameter of 5 mm.

6. The device according to any one of claims 4 or 5, wherein the centres of the perforations of the upper wall (2) and the side walls (3) of the box (1) are separated from one another by 12 mm.

7. The device according to any one of the preceding claims, wherein the at least one seal (4) is made of metal foam.

8. The device according to any one of the preceding claims, wherein the at least one seal is a linear element that is 1 cm thick.

9. The device according to any one of the preceding claims, wherein the lower tray (5) comprises a through-wall connector through which cables go through said lower tray (5) to be partially housed inside the housing formed by the upper wall (2), the side walls (3), the seals (4), and the lower tray (5) when the box (1) is in the lower position.

10. The device according to claim 9, wherein the cables are surrounded by a shielding mesh.

11. The device according to any one of the preceding claims, comprising rollers (12) made of a plastic material, arranged on the lower tray (5) such that, when the box (1) is in the lower position, a plurality of said rollers (12) are housed inside said box (1), and are configured to support the at least one article with an RFID tag.
